# EUROPEAN PATENT SPECIFICATION

(11) **EP 2 192 092 B1**
(45) Date of publication and mention of the grant of the patent: **31.08.2016**
(21) Application number: 08830280.7
(22) Date of filing: 12.09.2008
(51) Int. Cl.: C03C 27/12, B32B 17/10, C08J 5/18, C08K 3/22, C08L 29/14

(54) **INTERLAYER FOR LAMINATED GLASS**
ZWISCHENLAGE FÜR VERBUNDGLAS
INTERCALAIRE POUR VERRE FEUILLETÉ

(30) Priority: 12.09.2007 JP 2007236771
(43) Date of publication of application: 02.06.2010
(73) Proprietor: Sekisui Chemical Co., Ltd., Osaka 530-8565 (JP)
(72) Inventor: FUKATANI, Juichi, Koka-shi Shiga 528-8585 (JP); ICHIKAWA, Seiko, Koka-shi Shiga 528-8585 (JP)
(74) Representative: Hart-Davis, Jason
(86) International application number: PCT/JP2008/066545
(87) International publication number: WO 2009/035081

(56) References cited:
- JP-A- 08 259 279
- JP-A- 2000 007 386
- JP-A- 2006 126 468
- JP-A- 2007 008 798
- JP-A- 2007 055 823
- US-A1- 2001 016 261
- US-A1- 2005 142 366
- US-A1- 2005 277 709
- US-A1- 2007 047 077

## Description

### TECHNICAL FIELD

The present invention relates to an interlayer film for a laminated glass, a method for producing the interlayer film for a laminated glass, and a laminated glass obtained by using the interlayer film for a laminated glass.

### BACKGROUND ART

Since fewer fragments of broken glass scatter even under external impact, a laminated glass ensures a high level of safety. A laminated glass is widely employed in the windowpanes of vehicles such as automobiles, aircrafts, buildings and the like. A laminated glass is produced by interposing an interlayer film for a laminated glass between at least a pair of glasses and combining them. An interlayer film for a laminated glass comprises, for example, a polyvinyl acetal resin such as a polyvinyl butyral resin plasticized with a plasticizer.

Examples of usage of laminated glasses in buildings include lighting windows such as glass curtain walls, wainscot panels for balconies, bathroom doors and partitions. For such usage, a laminated glass not allowing visual identification of persons or objects behind the glass while transmitting a certain amount of visible light is suitably used for protecting privacy. In addition, a heat insulating property is required in a laminated glass used in a building for controlling a rise in room temperature by insulating infrared rays.

Examples of appropriate laminated glasses for this usage include opaque laminated glasses. Patent Document 1 discloses an opaque laminated glass obtained by bonding an interlayer film formed with a thermoplastic resin comprising an opacifier such as calcium carbonate dispersed therein between at least a pair of clear glass plates.

However, there has been a problem that the conventional laminated glass with an interlayer film containing an opecifier cannot exert a sufficient heat insulating property. Therefore, there has been a need for a laminated glass not allowing visual identification of persons or objects behind the glass while transmitting a certain amount of visible light and having an excellent heat insulating property.
Patent Document No. 1: Japanese Kohyo Publication No. Hei-02-56295 (JP-T H02-56295)

### DISCLOSURE OF THE INVENTION

### PROBLEMS TO BE SOLVED BY THE INVENTION

It is an object of the present invention to provide an interlayer film for a laminated glass not allowing visual identification of persons or objects behind the glass while transmitting a certain amount of visible light and having an excellent heat insulating property. Further, it is also an object of the present invention to provide a method for producing the interlayer film for a laminated glass, and a laminated glass obtained by using the interlayer film for a laminated glass.

### MEANS FOR SOLVING THE PROBLEMS

The present invention provides an interlayer film for a laminated glass, which comprises a polyvinyl acetal resin, a plasticizer, a dispersant, and titanium oxide particles, the titanium oxide particles being dispersed so as to have an average long diameter of 0.4 to 2 um and a dispersion density of 2.0 × 10⁵ to 7.0 × 10⁵ particles/cm².

Hereinafter, the present invention will be described in detail.

The interlayer film of the present invention contains a polyvinyl acetal resin, a plasticizer, a dispersant, and titanium oxide particles.

A polyvinyl acetal resin conventionally used as a raw material for an interlayer film for a laminated glass can be used as the above-mentioned polyvinyl acetal resin. Particularly, a polyvinyl butyral resin is suitably used. The above-mentioned polyvinyl acetal resin may be used alone or two or more kinds of these may be used in combination.

A preferred lower limit of acetalization degree of the above-mentioned polyvinyl acetal resin is 40 mol% and a preferred upper limit thereof is 85 mol%, and a more preferred lower limit thereof is 60 mol% and a more preferred upper limit thereof is 75 mol%.

A preferred lower limit of the polymerization degree of the above-mentioned polyvinyl acetal resin is 200 and a preferred upper limit thereof is 3000. When the polymerization degree of the polyvinyl acetal resin is less than 200, penetration resistance of the obtained laminated glass may be deteriorated. When the polymerization degree is more than 3000, moldability of the interlayer film for a laminated glass may be deteriorated and the processability of the obtained interlayer film for a laminated glass may be deteriorated because the rigidity thereof becomes too high. A more preferred lower limit of the polymerization degree of the polyvinyl acetal resin is 500 and a more preferred upper limit thereof is 2000.

The above-mentioned polyvinyl acetal resin is produced by acetalizing polyvinyl alcohol with aldehyde.

Polyvinyl alcohol as a raw material for the above-mentioned polyvinyl acetal resin is obtained by saponifying polyvinyl acetate. Polyvinyl alcohol having the saponification degree of 80 to 99.8 mol% is suitably used as the above-mentioned polyvinyl alcohol.

Aldehyde having 1 to 10 carbon atoms is suitably used as the above-mentioned aldehyde. Examples of the above-mentioned aldehyde having 1 to 10 carbon atoms include n-butylaldehyde, isobutylaldehyde, n-valeraldehyde, 2-ethylbutylaldehyde, n-hexylaldehyde, n-octylaldehyde, n-nonylaldehyde, n-decylaldehyde, formaldehyde, acetaldehyde, and benzaldehyde. Among these, n-butylaldehyde, n-hexylaldehyde and n-valeraldehyde are preferably used, and n-butylaldehyde having 4 carbon atoms is more preferably used. Each of these aldehydes may be used alone or two or more kinds of these may be used in combination.

Examples of the above-mentioned plasticizers include organic plasticizers such as monobasic organic acid ester and polybasic organic acid ester, and phosphoric acid plasticizers such as organophosphate plasticizers and organic phosphite plasticizers, and the like.

Examples of the above-mentioned monobasic organic acid ester plasticizers include glycol ester obtained by a reaction between glycol such as triethylene glycol, tetraethylene glycol and tripropylene glycol and monobasic organic acid such as butyric acid, isobutyric acid, caproic acid, 2-ethylbutyrate, heptylic acid, n-octylic acid, 2-ethyl hexyl acid, pelargonic acid (n-nonylic acid) and decylic acid. Among these, triethylene glycol dicaproate, triethylene glycol di-2-ethylbutyrate, triethylene glycol di-n-octylate, triethylene glycol di-ethylbutyrate, triethylene glycol di-2-ethylhexanoate, and triethylene glycol di-butyl sebacate are preferably used.

Examples of the above-mentioned polybasic organic acid ester plasticizers include ester compounds of polybasic organic acid such as adipic acid, sebacic acid and azelaic acid with linear or branched alcohol having 4 to 8 carbon atoms. Among these, dibutyl sebacate, dioctyl azelate, dibutylcarbitol adipate and the like are suitably used.

Examples of the above-mentioned organophosphate plasticizers include tributoxyethyl phosphate, isodecylphenyl phosphate and triisopropyl phosphate, and the like.

Among the above-mentioned plasticizers, triethylene glycol di-ethylbutyrate, triethylene glycol di-2-ethylhexanoate, triethylene glycol di-butyl sebacate and the like are particularly suitably used.

A preferred lower limit of a content of the above-mentioned plasticizer in the interlayer film for a laminated glass of the present invention is 45 parts by weight and a preferred upper limit thereof is 75 parts by weight, with respect to 100 parts by weight of the above-mentioned polyvinyl acetal resin. When the content of the above-mentioned plasticizer is less than 45 parts by weight, whitening of the interlayer film for a laminated glass may be caused and penetration resistance of the obtained laminated glass may be deteriorated. When the content of the above-mentioned plasticizer is more than 75 parts by weight, a bleed out of the plasticizer may be caused so as to deteriorate transparency and adhesion of the interlayer film for a laminated glass. As a result, greater optical distortion may be caused in the obtained laminated glass. A more preferred lower limit of the content of the above-mentioned plasticizer is 50 parts by weight and a more preferred upper limit thereof is 70 parts by weight.

Examples of the above-mentioned dispersant include sulfate ester compounds, phosphate ester compounds, carboxylate salts, polyalcohol-type surfactants, and compounds having at least one carboxyl group. Among these, the phosphate ester compounds and the compounds having at least one carboxyl group are suitably used.

As the above-mentioned dispersant, a compound having at least one kind of atom selected from the group consisting of nitrogen atom, phosphorus atom and chalcogen atom is suitably used. Examples of such compound include anion surfactants such as carboxylate salts, sulfonate salts, salts of sulfate ester and salts of phosphate ester; nonionic surfactants such as ether, ester and ester ether; cationic surfactants such as primary amine salts, secondary amine salts, tertiary amine salts, quaternary ammonium salts and polyethylene polyamine derivatives; ampholytic surfactants such as carboxy betaines, aminocarboxylate salts, sulfobetaines, aminosulfate esters and imidazoline. Among these, at least one kind selected from the group consisting of sulfate ester compounds, phosphate ester compounds, ricinoleate ester compounds and polycarboxylic acid ester compounds is suitably used. Among these, ricinoleate ester compounds are more preferably used as the above-mentioned dispersant because the titanium oxide particles can be sufficiently dispersed. Examples of the above-mentioned ricinoleate ester compound include polyglycerin condensed ricinoleate, and the like.

Examples of the above-mentioned phosphate ester compound include polyoxyethylene alkyl ether phosphate, alkylether phosphate, and polyoxyethylene alkylphenylether phosphate, and the like.

A preferred lower limit of a content of the above-mentioned dispersant in the interlayer film for a laminated glass of the present invention is 0.1 parts by weight and a preferred upper limit thereof is 50 parts by weight, with respect to 100 parts by weight of the titanium oxide particles. When the content of the above-mentioned dispersant is less than 0.1 parts by weight, the titanium oxide particles may not be sufficiently dispersed in the interlayer film for a laminated glass. When the content is more than 50 parts by weight, it may become difficult to adjust the adhesion between the obtained interlayer film for a laminated glass and a glass. A more preferred lower limit of the content of the above-mentioned dispersant is 0.5 parts by weight and a more preferred upper limit thereof is 30 parts by weight.

The titanium oxide particles are dispersed in the interlayer film for a laminated glass of the present invention.

A lower limit of the average long diameter of the above-mentioned titanium oxide particle dispersed in the interlayer film for a laminated glass of the present invention is 0.4 µm and an upper limit thereof is 2 µm. When the average long diameter of the above-mentioned titanium oxide particles is less than 0.4 µm, a sufficient heat insulating property cannot be achieved. When the average long diameter is more than 2 µm, a visible light transmittance is reduced. A preferred lower limit of the average long diameter of the above-mentioned titanium oxide particles is 0.6 µm and a preferred upper limit thereof is 1.5 µm.

Titanium oxide particles have been used as an opacifier in the conventional interlayer film for a laminated glass. However, particle diameters of the conventional titanium oxide particles are too small, and therefore, a sufficient heat insulating property is not achieved even in the interlayer film for a laminated glass containing a large amount of these titanium oxide particles. In the interlayer film for a laminated glass of the present invention, titanium oxide particles having larger particle diameters compared to those of the conventional particles are dispersed, and therefore, a sufficient heat insulating property can be exerted while visible light transmission is secured.

The above-mentioned average long diameter is obtained by producing a film section of the interlayer film for a laminated glass of the present invention, measuring the longest diameters of all the above-mentioned titanium oxide particles in a picture taken by a transmission electron microscopy (TEM) and calculating their arithmetic average.

Specific methods to determine the above-mentioned average long diameter include the following method. A number of 25 sites of the interlayer film for a laminated glass of the present invention are optionally cut out. The cut-out interlayer films for a laminated glass are cut into film sections each having a thickness of 200 nm in a thickness direction of the interlayer film for a laminated glass, by using a cryotome and the like. The longest diameters of all the above-mentioned titanium oxide particles in a TEM photograph of the obtained film section are measured to obtain the long diameters, and then the long diameters are number-averaged to obtain the above-mentioned average long diameter.

A lower limit of a dispersion density of the above-mentioned titanium oxide particles dispersed in the interlayer film for a laminated glass of the present invention is 2.0 × 10⁵ particles/cm² and an upper limit thereof is 7.0 × 10⁵ particles/cm². When the dispersion density of the above-mentioned titanium oxide particles is less than 2.0 × 10⁵ particles/cm², a sufficient heat insulating property cannot be achieved. When the dispersion density is more than 7.0 × 10⁵ particles /cm², visible light cannot be transmitted sufficiently. A preferred lower limit of the dispersion density of the above-mentioned titanium oxide particles is 3.0 × 10⁵ particles/cm², and a preferred upper limit thereof is 6.5 × 10⁵ particles/cm².

The dispersion density of the above-mentioned titanium oxide particles can be calculated by dividing the number of all the titanium oxide particles dispersed in a predetermined area of the interlayer film for a laminated glass of the present invention in a TEM photograph by the predetermined area.

Specific methods to determine the dispersion density of the above-mentioned titanium oxide particles include the following method. A number of 25 sites of the interlayer film for a laminated glass of the present invention are optionally cut out. The cut-out interlayer films for a laminated glass are cut into film sections each having a thickness of 200 nm in a thickness direction of the interlayer film for a laminated glass, by using a cryotome and the like. The number of all the titanium oxide particles in a TEM photograph of the obtained film section is divided by the photographed area, so that the above-mentioned dispersion density is calculated. For example, the number of all the titanium oxide particles present in 2850 µm² of each film section may be counted by using a TEM photograph, and then, the obtained number may be converted to the number of the titanium oxide particles present in 1 cm².

There is a correlation between the dispersion density of the above-mentioned titanium oxide particles and the content of the above-mentioned titanium oxide particles with respect to 100 parts by weight of the above-mentioned polyvinyl acetal resin. When the content of the above-mentioned titanium oxide particles with respect to 100 parts by weight of the above-mentioned polyvinyl acetal resin is X parts by weight, a preferred lower limit of the dispersion density of the above-mentioned titanium oxide particles in the interlayer film for a laminated glass of the present invention is 3.0 × 10³ particles X/cm², and a preferred upper limit thereof is 10⁵ particles · X/cm². When the above-mentioned titanium oxide particles are dispersed so as to have the dispersion density of 3.0 × 10³ to 3.0 × 10⁵ particles · X/cm², an interlayer film for a lamination glass having both the sufficient heat insulating property and the visible light transmittance can be obtained.

A preferred lower limit of the content of the above-mentioned titanium oxide particles in the interlayer film for a laminated glass of the present invention is 0.05 parts by weight, with respect to 100 parts by weight of the above-mentioned polyvinyl acetal resin. When the content of the above-mentioned titanium oxide particles is less than 0.05 parts by weight, sufficient heat insulating property may not be achieved. When the content is more than 1 part by weight, visible light may not be transmitted sufficiently. A more preferred lower limit thereof is 0.1 parts by weight and the upper limit thereof is 0.5 parts by weight.

According to need, the interlayer film for a laminated glass of the present invention may contain additives such as an antioxidant, a light stabilizer, an adhesion regulator, a flame retardant, an antistatic agent, a moisture resistant agent, a heat reflecting agent and a heat absorbing agent.

A preferred lower limit of the thickness of the interlayer film for a laminated glass of the present invention is 0.1 mm and a preferred upper limit thereof is 3 mm. When the thickness of the interlayer film for a laminated glass is less than 0.1 mm, the penetration resistance of the laminated glass may be deteriorated. When the thickness of the interlayer film for a laminated glass is more than 3 mm, an optical distortion may be caused in the laminated glass. A more preferred lower limit thereof is 0.25 mm and a more preferred upper limit thereof is 1.5 mm.

When the interlayer film for a laminated glass of the present invention is produced to have a thickness of 760 µm and sandwiched between two clear glasses each having a thickness of 2.5 mm to obtain a laminated glass, the laminated glass preferably has a visible light transmittance T_{V} of 3 to 60% and a diffuse visible light transmittance T_{VD} of 15% or more. These are measured in conformity with JIS R 3106. When the visible light transmittance T_{V} is less than 3%, transmission of visible light may not be secured. When the visible light transmittance T_{V} is more than 60%, transparency of a laminated glass using the interlayer film for a laminated glass of the present invention may be excessively increased.

The upper limit of the visible light transmittance T_{V} is more preferably 40% or less, further more preferably 30% or less, and particularly preferably 20% or less. The diffuse visible light transmittance T_{VD} is more preferably 20% or more, and further more preferably 25% or more.

When the interlayer film for a laminated glass of the present invention is produced to have a thickness of 760 µm and sandwiched between two clear glasses each having a thickness of 2.5 mm to obtain a laminated glass, the laminated glass preferably has a diffuse infrared transmittance T_{IRD} of 75% or less and a diffuse near infrared reflectance R_{NIRD} of 8% or more. These are measured in conformity with JIS R 3106. When the diffuse infrared transmittance T_{IRD} and the diffuse near infrared reflectance R_{NIRD} are out of the above range, a sufficient heat insulating property may not be achieved in the laminated glass using the interlayer film of the present invention.

The diffuse infrared transmittance T_{IRD} is more preferably 60% or less, further more preferably 55% or less and particularly preferably 45% or less. The diffuse near infrared reflectance R_{NIRD} is more preferably 10% or more, further more preferably 12% or more, and particularly preferably 15% or more.

When the interlayer film for a laminated glass of the present invention is produced to have a thickness of 760 µm and sandwiched between two clear glasses each having a thickness of 2.5 mm to obtain a laminated glass, the laminated glass preferably has a diffuse solar transmittance T_{SD} of 63% or less, which is measured in conformity with JIS R 3106. When the diffuse solar transmittance T_{SD} is more than 63%, a sufficient heat insulating property may not be achieved in the laminated glass using the interlayer film of the present invention. The above-mentioned diffuse solar transmittance T_{SD} is more preferably 55% or less, further more preferably 48% or less, and particularly preferably 40% or less.

Examples of a measuring device for measuring the visible light transmittance T_{V}, the diffuse visible light transmittance T_{VD}, the diffuse infrared transmittance T_{IRD}, the diffuse solar transmittance T_{SD} and the diffuse near infrared reflectance R_{NIRD} may include a spectrophotometer ("U-4000" produced by Hitachi, Ltd.), and the like.

Examples of a method for producing the interlayer film for a laminated glass of the present invention include a method comprising mixing the above-mentioned plasticizer, the above-mentioned dispersant and the above-mentioned titanium oxide particles to prepare a composition and kneading the above-mentioned composition with the above-mentioned polyvinyl acetal resin.

It is preferable to include dispersal treatment of the composition containing the above-mentioned plasticizer, the above-mentioned dispersant and the above-mentioned titanium oxide particles by using a bead mill so as to sufficiently disperse the titanium oxide particles in the interlayer film for a laminated glass of the present invention.

Examples of the kneading method include a method using an extruder, a plastograph, a kneader, a Banbury mixer, and a carender roll. Among these, an extruder is suitably used because of its suitability for a continuous production.

In the case of using the above-mentioned extruder, a method such as pressing and a plasto method can be used, and the plasto method is preferably used.

When the above-mentioned plasto method is used, the dispersion state of titanium oxide particles in the interlayer film for a laminated glass is easily controlled. The above-mentioned plasto method controls the agglomeration of titanium oxide particles, so that an interlayer film for a laminated glass in which titanium oxide particles are uniformly dispersed can be produced.

The present invention includes a laminated glass obtained by using the interlayer film for a laminated glass of the present invention.

The laminated glass of the present invention can be produced by interposing the interlayer film for a laminated glass of the present invention between at least a pair of glass plates and combining them.

Clear glass plates may be used as the above-mentioned glass plates. Examples of the glass plates include float plate glass, polished plate glass, molded plate glass, meshed plate glass, wired plate glass, colored plate glass, and heat-absorbing plate glass.

A conventionally-known production method may be used as a method for producing the laminated glass of the present invention.

The laminated glass of the present invention is particularly suitably used for exteriors and interiors of buildings. More specifically, examples of the exterior of buildings include sashes, glass roofs, glass curtain walls, and the like, and examples of the interiors of buildings include partitions and the like.

### EFFECT OF THE INVENTION

The present invention provides an interlayer film for a laminated glass not allowing visual identification of persons or objects behind the glass while transmitting a certain amount of visible light and having an excellent heat insulating property. The present invention also provides a method for producing the interlayer film for a laminated glass and a laminated glass obtained by using the interlayer film for a laminated glass.

### BEST MODE FOR CARRYING OUT THE INVENTION

Hereinafter, the present invention will be described in detail with reference to examples. However the present invention is not limited to these examples.

### (Example 1)

### (1) Production of an interlayer film for a laminated glass

An amount of 0.05 parts by weight of titanium oxide particles ("JR-1000" produced by TAYCA CORPORATION, average particle diameter of 1 µm), 0.5 parts by weight of polyglycerol condensed ricinoleate ("CR-ED" produced by Sakamoto Yakuhin Kogyo Co., Ltd.) as a dispersant, 20 parts by weight of triethylene glycol di-2-ethylhexanoate as a plasticizer were mixed and stirred by using an stirrer for 10 minutes to prepare a mixed solution.

The obtained mixed solution and beads (zirconia beads, volume-average particle diameter of 0.25 mm) were charged into an 800-ml container. A dispersal treatment was performed thereon at 2000 rpm for 4 hours by using a bead mill to prepare a dispersion liquid. Here, a weight ratio of the mixed solution to the beads was adjusted to 1:3.75 and the dispersion liquid was prepared by using a bead mill.

An amount of 20.55 parts by weight of the obtained dispersion liquid and 20 parts by weight of triethylene glycol di-2-ethylhexanoate (3GO) were stirred by using a mixer for 3 minutes to prepare a composition.

An entire amount of the obtained composition was added to 100 parts by weight of polyvinylbutyral resin, and an interlayer film for a laminated glass having a film thickness of 760 µm was produced by using a twin screw counter-rotating plasto extruder.

### (2) Production of a laminated glass

The obtained interlayer film for a laminated glass was interposed between two sheets of clear float glass (30 cm in height × 30 cm in width × 2.5 mm in thickness) to produce a laminated body. The obtained laminated body was placed in a rubber bag and deaerated at 20 torr of vacuum for 20 minutes. Then, vacuum press was performed thereon under heating at 90°C for 30 minutes to produce a temporarily-press-bonded laminated glass. The temporarily-press-bonded laminated glass was press-bonded under conditions of a temperature of 135°C and a pressure of 1176 kPa for 20 minutes by using an autoclave to produce a laminated glass.

### (Examples 2 to 8)

Interlayer films for a laminated glass each having a thickness of 760 µm and laminated glasses were produced in the same manner as in Example 1 except that the contents and the average particle diameters of titanium oxide particles were changed as shown in Tables 1 to 3.

### (Comparative Examples 1 to 8)

Interlayer films for a laminated glass each having a thickness of 760 µm and laminated glasses were produced in the same manner as in Example 1 except that the contents and the average particle diameters of titanium oxide particles were changed as shown in Tables 1 to 3.

### <Evaluation>

The interlayer films for a laminated glass and the laminated glasses obtained in Examples and Comparative Examples were evaluated as follows. Tables 1 to 3 show the results.

### (1) Evaluation on the average long diameter and the dispersion density

A number of 25 sites (1cm × 1cm) of each obtained interlayer film for a laminated glass were optionally cut out. The cut-out interlayer film for a laminated glass was cut into a film section for photographing so as to have a thickness of 200 nm in a thickness direction of the interlayer film for a laminated glass, by using a cryotome (produced by Leica). The obtained film section was immersed in hexane for 12 hours so as to remove the plasticizer, and was photographed by a transmission electron microscope (TEM).

Photographed images (observation area of 2850 µm² /1 site) of optionally selected 25 sites were observed and the longest diameters of all the titanium oxide particles present in the photographed image of the observed site were measured. The average long diameter was obtained by calculating the number average length of the obtained diameters. The number of all the titanium oxide particles present in the photographed image was counted and the obtained number was divided by the observation area (2850 µm² /1 site), so that the number of titanium oxide particles per 1 cm² was calculated.

It is to be noted that a TEM image was photographed at 5000 times magnifications by using an H-7100FA TEM produced by Hitachi, Ltd.

### (2) Evaluation on optical characteristics

The visible light transmittance T_{V}, the diffuse visible light transmittance T_{VD}, the diffuse infrared transmittance T_{IRD} and the diffuse near infrared reflectance R_{NIRD} of the obtained laminated glasses were measured by using a spectrophotometer (U-4000, produced by Hitachi, Ltd.), in conformity with JIS R 3106 (1998).

With respect to the transmittance, the case of 3 to 60% of the visible light transmittance T_{V} and 15% or more of the diffuse visible light transmittance T_{VD} was evaluated as "○", and the case of less than 3 % of the visible light transmittance T_{V}, more than 60% of the visible light transmittance T_{V}, or less than 15% of the diffuse visible light transmittance T_{VD} was evaluated as "×".

With respect to the heat insulating property, the case of 75% or less of the diffuse infrared transmittance T_{IRD} and 8% or more of the diffuse near infrared reflectance R_{NIRD} was evaluated as "○" and the case of more than 75% of the diffuse infrared transmittance T_{IRD}, or less than 8% of the diffuse near infrared reflectance R_{NIRD} was evaluated as "×".

**[Table 1]**

| | Titanium oxide particles | | | | | Optical characteristics (%) | | | | Transmittance | Heat insulating property |
|---|---|---|---|---|---|---|---|---|---|---|---|
| | Parts by weight | Average particle diameter (µm) | Average long diameter (µm) | Dispersion density | | T_{V} | T_{VD} | T_{IRD} | R_{NIRD} | | |
| | | | | particles /2850µm² | particles /cm² | | | | | | |
| Example 1 | 0.05 | 1.0 | 1.0 | 9.25 | 3.25 × 10⁵ | 25.27 | 60.77 | 60.60 | 9.90 | ○ | ○ |
| Example 2 | 0.10 | 1.0 | 1.0 | 18 | 6.32 × 10⁵ | 11.03 | 50.73 | 53.95 | 12.04 | ○ | ○ |
| Comparative Example 1 | 0 | - | - | - | - | 86.06 | 8927 | 76.87 | 7.36 | × | × |
| Comparative Example 2 | 0.00036 | 0.2 | 0.2 | 2.85 | 1.0 × 10⁵ | 89.05 | 89.27 | 76.87 | 7.36 | × | × |
| Comparative Example 3 | 0.80 | 1.0 | 1.0 | 112.25 | 3.94 × 10⁶ | 0.09 | 20.09 | 26.16 | 28.67 | × | ○ |

**[Table 2]**

| | Titanium oxide particles | | | | | optical characteristics (%) | | | | Transmittance | Heat insulating property |
|---|---|---|---|---|---|---|---|---|---|---|---|
| | Parts by weight | Average particle diameter (µm) | Average long diameter (µm) | Dispersion density | | T_{V} | T_{VD} | T_{IRD} | R_{NIRD} | | |
| | | | | particles /2850µm² | particles /cm² | | | | | | |
| Example 3 | 0.016 | 1.0 | 1.0 | 5.70 | 2.0 × 10⁵ | 58.60 | 77.25 | 70.50 | 9.10 | ○ | ○ |
| Example 4 | 0.08 | 1.0 | 1.0 | 14.25 | 5.0 × 10⁶ | 7.96 | 49.74 | 51.85 | 11.75 | ○ | ○ |
| Example 5 | 0.12 | 1.0 | 1.0 | 20.00 | 7.0 × 10⁵ | 3.48 | 42.01 | 45.64 | 13.88 | ○ | ○ |
| Comparative Example 4 | 0.002 | 1.0 | 1.0 | 2.85 | 1.0 × 10⁵ | 85.93 | 88.05 | 76.22 | 7.42 | × | × |
| Comparative Example 5 | 0.144 | 1.0 | 1.0 | 22.8 | 8.0 × 10⁵ | 2.56 | 39.43 | 43.52 | 14.77 | × | ○ |
| Comparative Example 6 | 0.186 | 1.0 | 1.0 | 28.5 | 1.0 × 10⁶ | 1.56 | 35.64 | 40.33 | 16.31 | × | ○ |

**[Table 3]**

| | Titanium oxide particles | | | | | Optical characteristics (%) | | | | Transmittance | Heat insulating property |
|---|---|---|---|---|---|---|---|---|---|---|---|
| | Parts by weight | Average particle diameter (µm) | Average long diameter (µm) | Dispersion density | | T_{V} | T_{VD} | T_{IRD} | R_{NIRD} | | |
| | | | | particles /2850µm² | particles /cm² | | | | | | |
| Example 6 | 0.06 | 0.7 | 0.7 | 14.25 | 5.0 × 10⁵ | 27.57 | 62.15 | 62.39 | 9.36 | ○ | ○ |
| Example 7 | 0.16 | 2.0 | 2.0 | 14.25 | 5.0 × 10⁵ | 25.99 | 57.26 | 49.53 | 12.68 | ○ | ○ |
| Example 8 | 0.05 | 0.4 | 0.4 | 14.25 | 5.0 × 10⁵ | 40.30 | 156.74 | 68.37 | 9.04 | ○ | ○ |
| Comparative Example 7 | 0.02 | 0.2 | 0.2 | 14.25 | 5.0 × 10⁵ | 60.08 | 72.51 | 72.48 | 7.87 | × | × |
| Comparative Example 8 | 0.28 | 2.5 | 2.5 | 14.25 | 5.0 × 10⁵ | 0.72 | 30.12 | 34.37 | 21.28 | × | ○ |

### INDUSTRIAL APPLICABILITY OF THE INVENTION

The present invention provides an interlayer film for a laminated glass not allowing visual identification of persons or objects behind the glass while transmitting a certain amount of visible light and having an excellent heat insulating property. The present invention also provides a method for producing the interlayer film for a laminated glass, and a laminated glass obtained by using the interlayer film for a laminated glass.

## Claims

1. An interlayer film for a laminated glass,
which comprises a polyvinyl acetal resin, a plasticizer, a dispersant, and titanium oxide particles,
the titanium oxide particles being dispersed so as to have an average long diameter of 0.4 to 2 µm and a dispersion density of 2.0 × 10⁵ to 7.0 × 10⁵ particles/cm², and
the content of the titanium oxide particles being 0.05 to 0.5 parts by weight with respect to 100 parts by weight of the polyvinyl acetal resin.

2. The interlayer film for a laminated glass according to claim 1,
wherein a visible light transmittance T_{V} of a laminated glass measured in conformity with JIS R 3106 is 3 to 60% and a diffuse visible light transmittance T_{VD} of the laminated glass measured in conformity with JIS R 3106 is 15% or more,
the laminated glass being obtained by sandwiching an interlayer film for a laminated glass having a thickness of 760 µm between two clear glasses each having a thickness of 2.5 mm.

3. The interlayer film for a laminated glass according to claim 1 or 2,
wherein a diffuse infrared transmittance T_{IRD} of a laminated glass measured in conformity with JIS R 3106 is 75% or less and a diffuse near infrared reflectance R_{NIRD} of the laminated glass measured in conformity with JIS R 3106 is 8% or more,
the laminated glass being obtained by sandwiching an interlayer film for a laminated glass having a thickness of 760 µm between two clear glasses each having a thickness of 2.5 mm.

4. A laminated glass,
which is obtained by using the interlayer film for a laminated glass according to claim 1, 2 or 3.

5. Use of the interlayer film of claim 2 for manufacture of a heat insulating laminated glass not allowing visual identification of persons or objects behind the glass.

## Patentansprüche

1. Zwischenschichtfilm für ein Verbundglas,
der ein Polyvinylacetalharz, einen Weichmacher, ein Dispergiermittel und Titanoxidpartikel umfasst,
wobei die Titanoxidpartikel so verteilt sind, dass sie einen durchschnittlichen Längendurchmesser von 0,4 bis 2 µm und eine Verteilungsdichte von 2,0 x 10⁵ bis 7,0 x 10⁵ Partikel/cm² aufweisen, und
wobei der Gehalt der Titanoxidpartikel 0,05 bis 0,5 Gewichtsanteile in Bezug auf 100 Gewichtsanteile des Polyvinylacetalharzes beträgt.

2. Zwischenschichtfilm für ein Verbundglas nach Anspruch 1,
wobei ein Durchlässigkeitsgrad T_{V} für sichtbares Licht, der in Übereinstimmung mit JIS R 3106 gemessen wird, eines Verbundglases 3 bis 60 % beträgt und ein Durchlässigkeitsgrad T_{VD} für diffuses sichtbares Licht, der in Übereinstimmung mit JIS R 3106 gemessen wird, des Verbundglases 15 % oder mehr beträgt,
wobei das Verbundglas durch Einfügen eines Zwischenschichtfilms für ein Verbundglas, der eine Dicke von 760 µm aufweist, zwischen zwei Klarglase, die jeweils eine Dicke von 2,5 mm aufweisen, erhalten ist.

3. Zwischenschichtfilm für ein Verbundglas nach Anspruch 1 oder 2,
wobei ein Durchlässigkeitsgrad T_{IRD} für diffuses Infrarot, der in Übereinstimmung mit JIS R 3106 gemessen wird, eines Verbundglases 75 % oder weniger beträgt und ein Reflektionsgrad R_{NIRD} für diffuses Nahinfrarot, der in Übereinstimmung mit JIS R 3106 gemessen wird, des Verbundglases 8 % oder mehr beträgt,
wobei das Verbundglas durch Einfügen eines Zwischenschichtfilms für ein Verbundglas, der eine Dicke von 760 µm aufweist, zwischen zwei Klarglase, die jeweils eine Dicke von 2,5 mm aufweisen, erhalten ist.

4. Verbundglas,
das unter Verwendung des Zwischenschichtfilms für ein Verbundglas nach Anspruch 1, 2 oder 3 erhalten ist.

5. Verwendung des Zwischenschichtfilms nach Anspruch 2 zur Herstellung eines wärmeisolierenden Verbundglases, das die visuelle Identifizierung von Personen oder Objekten hinter dem Glas nicht erlaubt.

## Revendications

1. Film intercouche pour un verre stratifié,
qui comprend une résine de polyvinylacétal, un plastifiant, un dispersant et des particules d'oxyde de titane,
les particules d'oxyde de titane étant dispersées de sorte à avoir un diamètre de longueur moyenne de 0,4 à 2 µm et une densité de dispersion de 2,0 x 10⁵ à 7,0 x 10⁵ particules/cm², et
la teneur en particules d'oxyde de titane étant de 0,05 à 0,5 partie en poids par rapport à 100 parties en poids de la résine de polyvinylacétal.

2. Film intercouche pour un verre stratifié selon la revendication 1,
dans lequel une transmittance de lumière visible T_{V} d'un verre stratifié mesurée selon la norme JIS R 3106 est de 3 à 60 % et une transmittance de lumière visible diffuse T_{VD} du verre stratifié mesurée selon la norme JIS R 3106 est supérieure ou égale à 15 %,
le verre stratifié étant obtenu en intercalant un film intercouche pour un verre stratifié ayant une épaisseur de 760 µm entre deux verres transparents ayant chacun une épaisseur de 2,5 mm.

3. Film intercouche pour un verre stratifié selon la revendication 1 ou 2,
dans lequel une transmittance de lumière infrarouge diffuse T_{IRD} d'un verre stratifié mesurée selon la norme JIS R 3106 est inférieure ou égale à 75 % et une réflectance de lumière infrarouge proche diffuse R_{NIRD} du verre stratifié mesurée selon la norme JIS R 3106 est supérieure ou égale à 8 %,
le verre stratifié étant obtenu en intercalant un film intercouche pour un verre stratifié ayant une épaisseur de 760 µm entre deux verres transparents ayant chacun une épaisseur de 2,5 mm.

4. Verre stratifié,
qui est obtenu en utilisant le film intercouche pour un verre stratifié selon la revendication 1, 2 ou 3.

5. Utilisation du film intercouche selon la revendication 2, pour la fabrication d'un verre stratifié d'isolation thermique ne permettant pas l'identification visuelle de personnes ou d'objets derrière le verre
